# EUROPEAN PATENT APPLICATION

(11) **EP 1 702 585 A1**
(43) Date of publication of application: **20.09.2006**
(21) Application number: 06003912.0
(22) Date of filing: 27.02.2006
(51) Int. Cl.: A61C 19/10, A61C 13/08

(54) **Aesthetic guide system for denture planning**

(30) Priority: 15.03.2005 US 80602
(71) Applicant: Heraeus Kulzer GmbH, 63450 Hanau (DE)
(72) Inventor: Hornischer, T. G., Tyler, 75701 Texas (US)
(74) Representative: Kühn, Hans-Christian

(57) **Abstract**

In the process of denture planning, a device for assessing the aesthetics of dentures is provided having a fake front teeth row comprising a flexible carrier of substantially rectangular shape which carries a row of artificial front teeth or images of such teeth in life size.

## Description

The invention relates to a method and device for assessing the aesthetics of dentures.

In the process of planning dentures, when the patients lacks all upper front teeth, the size of the denture arches is determined by measurements in the nose region. Once this is determined the size of the teeth to be placed onto these arches can be calculated. However, the decision on which form and colour the teeth of the future denture should have are based on individual aesthetic considerations, and in the end are a matter of taste.

The invention provides a device, which may be used to make this decision making process easier, both for the patient and for the dentist/dental technician.

US 6 623 271 B2 provides a device for matching artificial ceramic teeth to natural teeth. The artificial teeth are positioned temporarily on a dental arch with putty. The arch can then be inserted into the patient's mouth, thus allowing both dentist and patient to assess the colour under real life lighting conditions.

The present invention provides a system wherein artificial teeth or images of teeth are provided in readymade presized sets simulating the front teeth part of the mouth on a substantially rectangular flexible carrier or the teeth are connected so as to provide a flexible tooth arrangement. Alternatively images of teeth are printed or transferred otherwise on a flexible, substantially rectangular carrier. These fake teeth sets or tooth images have different forms, allowing the patient to study the aesthetic appearance of each of them. Generally the forms of teeth are put in three categories: Square, trigonal and oval, but may also be of other shapes.

Different models of the upper front teeth row including cuspids are provided and may be placed in the patient's teethless mouth. The flexibility of the carrier or the teeth row allows the device to be placed so as to follow the patients natural dental arches and provides an easy fit between any adjacent teeth. The result is a very natural appearance of the teeth or images.

The carrier can be made of a transparent material or may be colored at least in part to resemble the patient's gingiva.

In a preferred embodiment the invention provides a kit of several flexible carriers of substantially rectangular shape which carry a row of artificial front teeth or images of such teeth in life size. Different tooth shapes may be provided on each flexible carrier.

In a preferred embodiment the invention provides a device for assessing the aesthetics of dentures having
- several fake front rows of artificial teeth, each mounted on the distal end of a separate stalk
- the stalks being connected on their proximal ends by a joint mechanism,
wherein the joint mechanism, together with the stalks and the fake front rows, forms a fan arrangement, the stakes with the fake front rows being the wings of the fan.

Preferably, the shape of the artificial teeth or teeth images varies for each set of front row teeth, with trigonal, square, oval, or other shapes.

It is also possible to provide several fan arrangements, with different sizes of artificial teeth. Thus a set of fans may be provided, covering different teeth forms in different sizes.

The invention further relates to a method for assessing the aesthetics of dentures wherein
- the fake front rows of the device described above are placed in a patients mouth lacking the corresponding front row teeth;
- the fake front rows are arranged so as to mimic the front rows of a future denture,
- and an assessment of the aesthetics of each form of teeth is made.

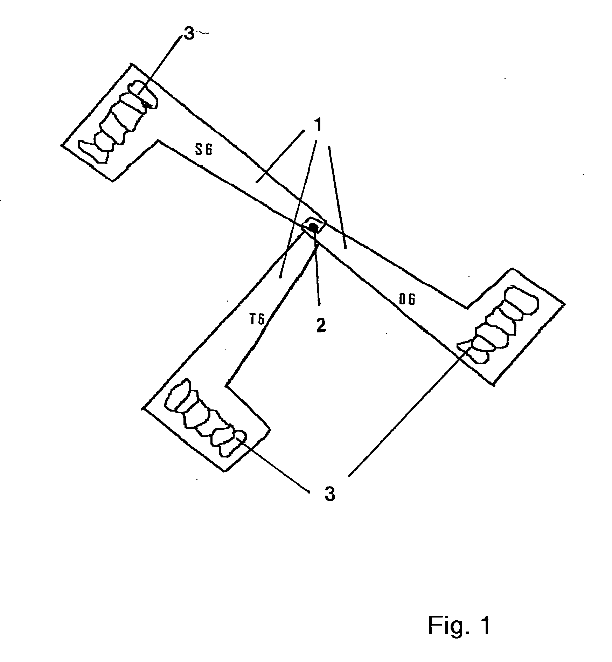

An especially preferred embodiment of the device of the invention is shown in Fig 1.

Fig. 1 shows a device with a three wing fan arrangement

Three stakes 1 connected by a joint 2, with a flexible fake front row of artificial teeth 3 mounted on the distal end of each stake, form the wings of a fan arrangement. The dentist or dental technician is able to select each stake individually, place it in the patient's mouth to simulate the position of a future denture and assess the aesthetic effect together with the patient. The stakes are preferably made of a light, transparent material.

## Claims

1. A device for assessing the aesthetics of dentures having a fake front teeth row comprising
• At least one flexible carrier of substantially rectangular shape which carries a row of artificial front teeth or images of such teeth in life size.

2. A device according to claim 1 wherein the flexible carrier is transparent and/or gingiva-coloured.

3. A kit comprising several devices of claim 1, wherein the teeth or teeth images have different tooth shapes, each fake front teeth row carrying or representing a set of one shape.

4. A kit according to claim 3 wherein the tooth shapes are trigonal, square, or oval.

5. A device according to claim 1 having
• several fake front rows of artificial teeth or teeth images (3), each mounted on the proximal end of a separate stalk (1)
• the stalks (1) being connected on the distal ends by a joint mechanism (2)
wherein the joint mechanism (2) forms - together with the stalks (1) and the fake front rows (3) - a fan arrangement, the stalks and fake front rows being the wings of the fan.

6. A device of claim 5, wherein the shape of the artificial teeth or tooth images varies, each set of front row teeth or images having or representing a different tooth shape.

7. A device of claim 6 wherein the tooth shapes are trigonal, square, or oval.

8. A method for assessing the aesthetics of dentures wherein
- the fake front rows of a device of claim 1 or 5 are placed in a patient's mouth lacking the corresponding front row teeth;
- the fake front rows are arranged so as to mimic the front rows of a future denture, and
- an assessment of the aesthetics of each form of teeth is made.
